# EUROPEAN PATENT APPLICATION

(11) **EP 2 009 568 A2**
(43) Date of publication of application: **31.12.2008**
(21) Application number: 08011422.6
(22) Date of filing: 24.06.2008
(51) Int. Cl.: G06F 21/00

(54) **Biometric authentication**

(30) Priority: 27.06.2007 JP 2007169073
(71) Applicant: Hitachi Ltd., Chiyoda-ku Tokyo 100-8280 (JP)
(72) Inventor: Hirata, Shinji, Tokyo 100-8220 (JP); Takahashi, Kenta, Tokyo 100-8220 (JP); Wakui, Katsunori, Tokyo 100-8220 (JP); Tokoro, Yasuyuki, Tokyo 100-8220 (JP)
(74) Representative: Strehl Schübel-Hopf & Partner

(57) **Abstract**

The present invention provides a biometric authentication system including: a parameter manage server having a user parameter generating portion for generating a user parameter using a user ID transmitted from a client terminal, a master key and a temporary parameter; the client terminal having an input unit by which a user ID provided in advance for a user is input, a biological information sensor which acquires biological information of a user, a feature extracting portion which extracts feature from the biological information acquired by the biological information sensor and a transforming portion which transforms the feature using the user parameter generated by the parameter manage server to generate transformation feature; and an authentication server having a matching portion which matches the transformation feature transmitted from the client terminal against a template stored in advance in the storing portion.

## Description

### BACKGROUND OF THE INVENTION

### Field of the Invention

The present invention relates to a biometric authentication system for authenticating a person using the biological information of the person and the method therefor.

### Description of the Related Art

A biometric authentication system of this type acquires the biological information of a user at the time of registration, extracts information called feature and registers it. The registered information is called a template. At the time of authentication, the biological information of the user is again acquired and feature are extracted and matched against the template to ascertain whether the template coincides with that of the user.

In a system for performing authentication using the biological information of a user who resides on the side of a client to which a server is connected through a network, the server typically holds a template. The client acquires the biological information of the user at the time of authentication, extracts feature and sends them to the server. The server matches feature against the template to ascertain whether the template coincides with that of the user.

Since the template is information by which a user can be identified, it needs to be strictly managed as private information, requiring a high management cost. Relatively many users have a psychological resistance to the registration of their templates in terms of privacy.

The number of one kind of pieces of biological information owned by a single user is limited. For example, the number of fingerprints are limited only to the number of those of eight fingers and two thumbs, so that a template cannot be easily changed unlike a password and a cryptographic key. If a template is leaked outside to incur the risk of counterfeit, a problem is caused in that a biometric authentication cannot be performed using the template. Furthermore, if the same biological information is registered in a different system, a threat is offered to other systems.

As a solution to these problems, there is available a method of transmitting encrypted biological information to an authentication server. However, the encrypted information needs decoding at the time of authentication, so that it is difficult to prevent a leakage due to a high-level attack and an intentional leakage by a server administrator. The method is also insufficient as a solution to a problem with the privacy.

A method (cancelable biometric authentication) is proposed in which feature are transformed by a constant function and a secret parameter owned by a client in the time of registration, transformed feature is stored as a template in a server with the original information kept secret, the client transforms newly extracted feature of biological information by the same function and parameter and sends them to the client at the time of authentication and the server matches the received feature against the template as it is, by N.K. Ratha, J.H. Connell, R.M. Bolle, "Enhancing security and privacy in biometrics-based authentication systems", IBM Systems Journal, Vol. 40, No.3, 2001.

According to this technique, the transforming parameter is kept secret by the client does not enable the server to know the original feature even at the time of authentication, protecting the privacy of a user. In addition, even if the template is leaked out, the transforming parameter is changed and a template is again produced and registered to enable safety to be kept.

If a system is realized by using the cancelable biometric authentication disclosed in the above document written by N.K. Ratha, J.H. Connell, R.M. Bolle, "Enhancing security and privacy in biometrics-based authentication systems", IBM Systems Journal, Vol. 40, No.3, 2001, the transforming parameter is stored in a Smart Card or produced from a password. The use of the Smart Card or password loses the convenience which is one of great advantages of biometric authentication. Furthermore, if there are plural client terminals, a user may not perform authentication through either of the terminals.

### SUMMARY OF THE INVENTION

The present invention has for its object to provide: a cancelable biometric authentication system capable of performing authentication through any of plural terminals without the use of a Smart Card or a password; a parameter manage server, a client terminal and a biometric authentication method used in the system; and a program used in the same.

A biometric authentication system according to the present invention preferably includes: plural client terminals which acquire the biological information of a user; a first server which authenticates the biological information acquired by the client terminal; and a second server which manages a parameter used at the time of biometric authentication, the client terminals and the first and the second server being connected together through a network; wherein the client terminal includes an input unit by which a user ID provided in advance for a user is input, a biological information sensor which acquires the biological information of the user, a feature extracting portion which extracts feature from the biological information acquired by the biological information sensor and a transforming portion which transforms the feature using the user parameter generated by the second server to generate transformation feature, the first server includes a storing portion which stores a template of biological information of the user and a matching portion which matches the transformation feature transmitted from the client terminal against the template stored in the storing portion, and the second server includes a user parameter generating portion which generates the user parameter using the user ID transmitted from the client terminal.

Preferably, the second server includes a master key generating portion which generates a master key and a temporary parameter generating portion which generates a temporary parameter, and the user parameter generating portion generates the user parameter using the user ID, the master key generated by the master key generating portion and the temporary parameter generated by the temporary parameter generating portion.

Preferably, the second server further includes a parameter difference generating portion which generates a parameter difference using a random number and the temporary parameter generating portion which renews the temporary parameter using the parameter difference generated by the parameter difference generating portion.

Preferably, the user parameter generating portion in the second server generates the user parameter such that the user ID is bit-concatenated to the master key to generate a hash of the bit-concatenated data and each value of the hash is multiplied with each value of the temporary parameter.

Preferably, the user parameter generating portion in the second server generates the user parameter such that the user ID is bit-concatenated to the master key to generate a hash of the bit-concatenated data and each value of the hash is added to each value of the temporary parameter.

Preferably, the user parameter generating portion in the second server generates the user parameter such that the user ID is bit-concatenated to the master key to generate a random number with the bit-concatenated data as a seed and each value of the generated random number is multiplied with each value of the temporary parameter.

Preferably, the user parameter generating portion in the second server generates the user parameter such that the user ID is bit-concatenated to the master key to generate a random number with the bit-concatenated data as a seed and each value of the generated random number is added to each value of the temporary parameter.

Preferably, the first server stores in advance in the storing portion the transformation feature, as the template, which are transformed by the user parameter and generated in the client terminal.

Preferably, the first sever includes a renewal process portion which renews the template stored in the storing portion using the parameter difference generated by the parameter difference generating portion of the second server and stores the renewed template in the storing portion.

According to the present invention, a biometric authentication method for a biometric authentication system including plural client terminals which acquire biological information of a user a first server which authenticates the biological information acquired by the client terminal and a second server which manages a parameter used at the time of biometric authentication, the client terminals and the first and the second server being connected together through a network, the biometric authentication method preferably includes the steps of:
inputting a user ID provided in advance for a user through an input unit, acquiring the biological information of the user using a biological information sensor, extracting feature from the biological information acquired by the biological information sensor, in the client terminal, generating the user parameter using the user ID
transmitted from the client terminal, in the second server, transforming the feature using the user parameter received from the second server to generate transformation feature, in the client terminal, and matching the transformation feature transmitted from the client terminal against the template of biological information of the user stored in advance in the storing portion, in the first server.

Preferably, at the time of registering the template, the client terminal transforms the feature using the user parameter obtained from the second server to generate transformation feature and transmits the transformation feature to the first server and the first server stores the received transformation feature in the storing portion as a template.

According to the present invention, a parameter manage server which is connected to plural client terminals acquiring the biological information of a user and an authentication server authenticating biological information through a network and manages a parameter used at the time of biometric authentication, the parameter manage server preferably includes: a receiving portion which receives a user ID transmitted from the client terminal; a master key generating portion which generates a master key; a temporary parameter generating portion which generates a temporary parameter; a storing portion which stores the generated master key and temporary parameter; a user parameter generating portion which generates the user parameter using the user ID received through the receiving portion, the master key generated by the master key generating portion and the temporary parameter generated by the temporary parameter generating portion; and a transmitting portion which transmits the user parameter generated by the user parameter generating portion to the client terminal.

According to the present invention, an authentication managing method for a parameter manage server which is connected to plural client terminals acquiring the biological information of a user and an authentication server authenticating biological information through a network and manages a parameter used at the time of biometric authentication, the authentication managing method includes the steps of: receiving a user ID transmitted from the client terminal through a communication portion; generating a master key; generating a temporary parameter; storing the generated master key and temporary parameter in a storing portion; generating the user parameter using the user ID received through the communication portion, the master key and the temporary parameter; and transmitting the generated user parameter to the client terminal through the communication portion.

According to the present invention, a client terminal used for authenticating biological information of a user and connected to a first server which authenticates biological information of a user and a second server which generates a parameter used for subjecting the biological information to a transformation process, through a network, the client terminal includes: an input unit by which a user ID provided in advance for a user is input; a transmitting portion which transmits the user ID input by the input unit to the second server; a receiving portion which receives the parameter from the second server; a biological information sensor which acquires the biological information of the user; a feature extracting portion which extracts feature from the biological information acquired by the biological information sensor; a transforming portion which transforms the feature using the user parameter received from the receiving portion to generate transformation feature; and a transmitting portion which transmits the transformation characteristic generated by the transforming portion to the first server.

According to the present invention, a program used for biometric authentication executed by a client terminal, a first server and a second server in a biometric authentication system including the plural client terminals which acquire the biological information of a user, the first server which authenticates the biological information acquired by the client terminal and the second server which manages a parameter used at the time of biometric authentication, the client terminals and the first and the second server being connected together through a network, the program includes: a portion for inputting a user ID provided in advance for a user through an input unit, a portion for acquiring the biological information of the user using a biological information sensor, a portion for extracting feature from the biological information acquired by the biological information sensor, in the client terminal,
a portion for generating the user parameter using the user ID transmitted from the client terminal, in the second server,
a portion for transforming the feature using the user parameter received from the second server to generate transformation feature, in the client terminal, and
a portion for matching the transformation feature transmitted from the client terminal against a template of biological information of the user stored in advance in the storing portion, in the first server.

The program according to the present invention also includes an authentication managing program executed by the parameter manage server for managing a parameter used at the time of biometric authentication.

The present invention can perform biometric authentication by using a user ID and biological information provided in advance without using a Smart Card or a password. It is also capable of performing biometric authentication through any of plural client terminals. This realizes a cancelable biometric authentication system which is higher in convenience than a conventional system.

### DETAILED DESCRIPTION OF THE DRAWINGS

FIG. 1 is a schematic diagram illustrating an example of the configuration of a cancelable finger-vein authentication system according to one embodiment;
FIG. 2 is a schematic diagram illustrating the functional configuration of an authentication server 100;
FIG. 3 is a schematic diagram illustrating the functional configuration of a client terminal 110;
FIG. 4 is a schematic diagram illustrating the functional configuration of a parameter manage server 140;
FIG. 5 is a flow chart of a system initialization in a parameter manage server 140;
FIG. 6 is a flow chart of a registration process in one embodiment;

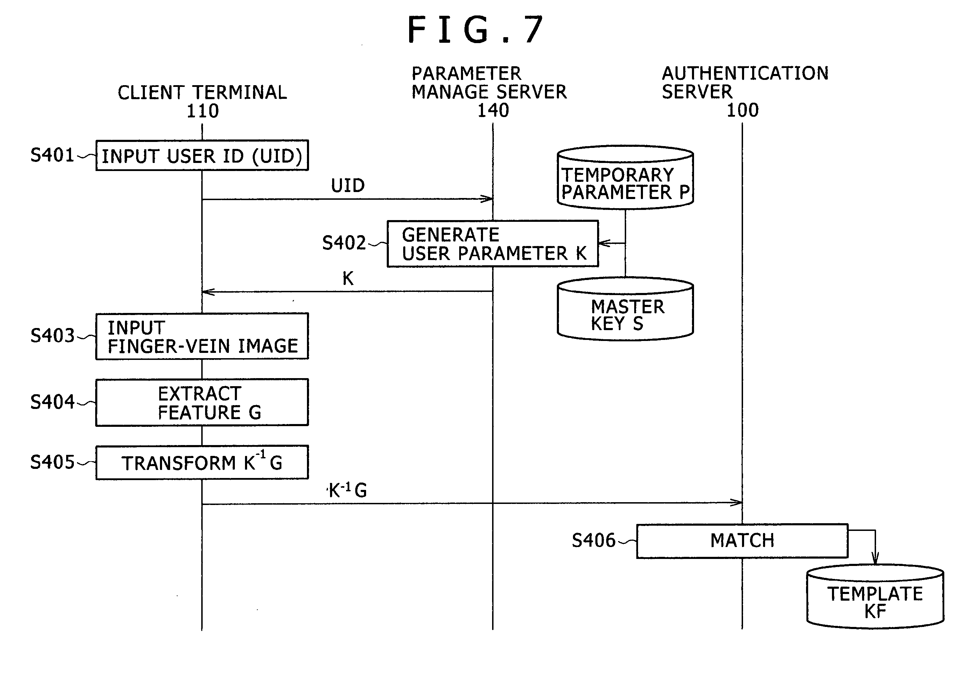

FIG. 7 is a flow chart of an authentication process in one embodiment; and
FIG. 8 is a flow chart of a renewal process for a temporary parameter in one embodiment.

### DETAILED DESCRIPTION OF THE PREFERRED EMBODIMENTS

An embodiment is described below with reference to the drawings.

The embodiment cites as an example a cancelable finger-vein authentication system in which a parameter which acts as a key used for subjecting biological information (a finger vein, for example) to a transformation process by a newly provided parameter manage server, a user ID provided for a user and a finger vein image are input through a client terminal and the finger vein is matched while keeping the feature of the finger vein secret by an authentication server. Each user is allocated in advance a user ID being inherent information at the time of starting the system.

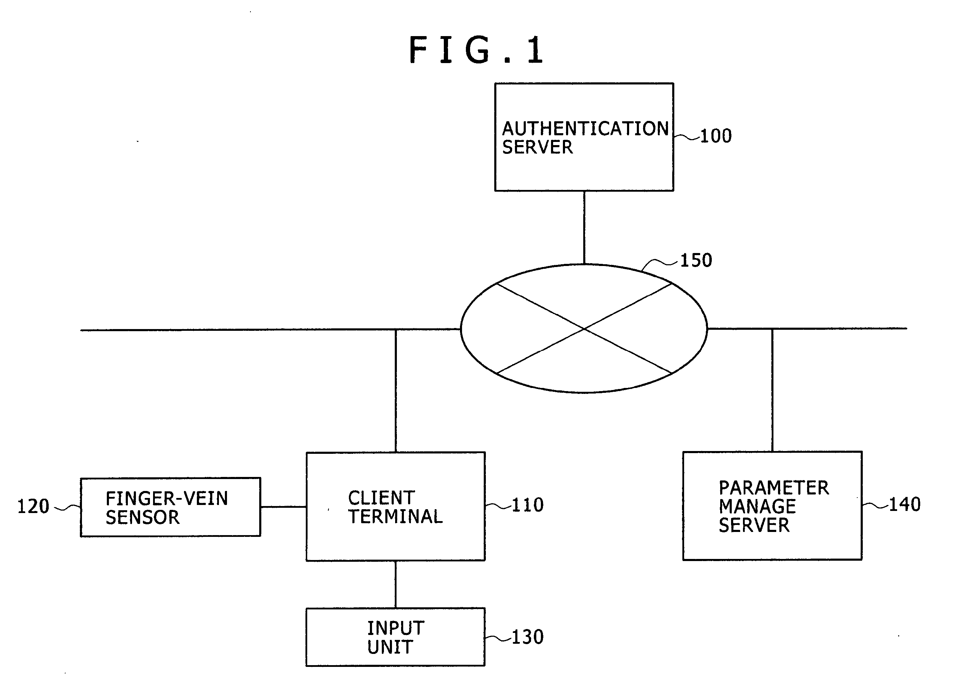

FIG. 1 is a schematic diagram illustrating an example of the configuration of a cancelable finger-vein authentication system.

The system includes an authentication server 100, a client terminal 110 and a parameter manage server 140 which are connected together through a network 150. Although one client terminal 110 is connected to the network 150 in the example of the figure, plural client terminals 110 are generally connected to the network.

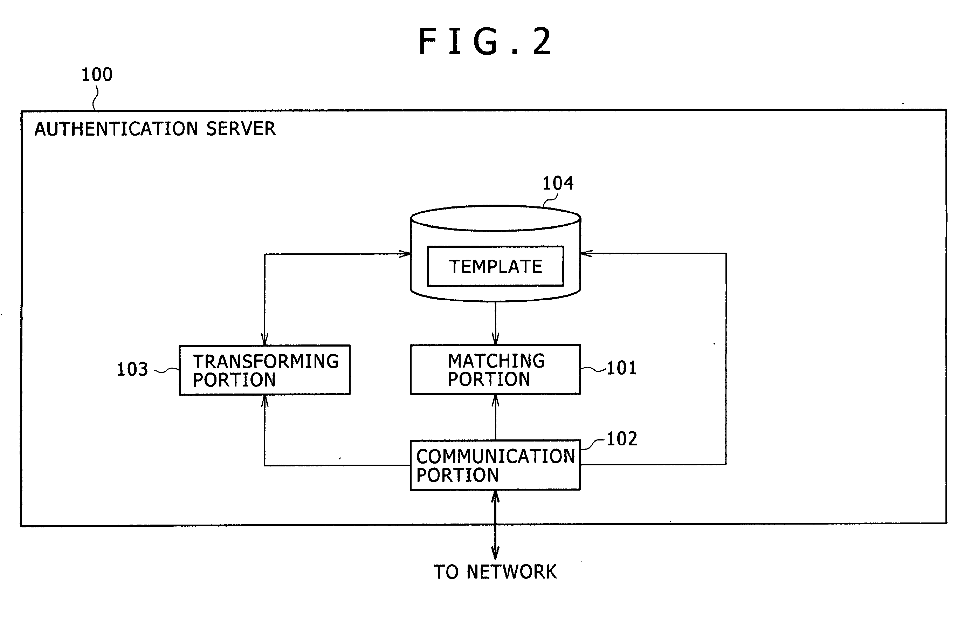

The authentication server 100 stores the templates of all users in a data base 104 illustrated in FIG. 2 and performs a biometric authentication process for users. At the time of authentication, the authentication server 100 matches biological-information transformation feature transmitted from the client terminal 110 against a template registered in advance. At the time of renewal of the template, the authentication server the authentication server 100 receives a parameter difference transmitted from the parameter manage server 140 and renews the template. Registration, authentication and renewal process are described in detail later.

The client terminal 110 includes a finger-vein sensor 120 and an input unit 130 such as a key board or a touch panel. Although not illustrated, the client terminal 110 typically includes a display device.

At the time of user registering, a user inputs through the client terminal 110 a user ID provided for the user through the input unit 130 to transmit the user ID to the parameter manage server 140. The parameter manage server 140 receives a user parameter generated using the user ID and transmitted. The parameter manage server 140 reads the finger-vein image of the user from the finger-vein sensor 120 to extract the feature thereof and transform them using the user parameter. The transformed feature (transformation feature) are transmitted to the authentication server 100 and registered therein.

At the time of authentication, the user similarly transmits the user ID to the parameter manage server the parameter manage server 140 and receives a user parameter transmitted from the parameter manage server 140. The finger-vein image of the user is read from the finger-vein sensor 120 to extract the feature thereof and transform them using the user parameter. The transformation feature are transmitted to the authentication server 100 and matched therein.

The parameter manage server 140 generates and stores a master key and a temporary parameter at the time of system initialization. The user parameter is a data corresponding to a cryptographic key produced on the basis of the user ID and is used as a data corresponding to an encipherment key used when the client terminal 110 produces (or, enciphers) the transformation feature.

At the time of registration and authentication, the parameter manage server 140 generates the user parameter using the user ID in response to a request from the client terminal 110 and transmits it to the client terminal 110. At the time of renewal of a temporary parameter, the parameter manage server 140 generates a parameter difference to renew a temporary parameter and transmits the parameter difference to the authentication server 100. The configuration and operation of the authentication server 100, the client terminal 110 and the parameter manage server 140 are described in detail later.

FIG. 2 is a schematic diagram illustrating the functional configuration of the authentication server 100. The authentication server 100 functionally includes a matching portion 101, a communication portion 102, a transforming portion 103 and a data base (DB) 104. Although the configuration of hardware is not illustrated, the authentication server 100 includes a storage device, a CPU and a memory. Various functions of the above matching portion 101 to the transforming portion 103 are realized by the CPU executing a predetermined application program.

At the time of registration, the authentication server 100 receives transformation feature KF transmitted from the client terminal 110 and stores them as a template in the DB 104. The DB 104 stores the templates of all users.

At the time of authentication, the matching portion 101 matches transformation feature K⁻¹G transmitted from the client terminal 110 against the template KF to determine as to whether the user is authenticated.

At the time of renewal of a template, the authentication server 100 receives a parameter difference Δ transmitted from the parameter manage server 140. The transforming portion 103 generates KF' = ΔKF to renew the template.

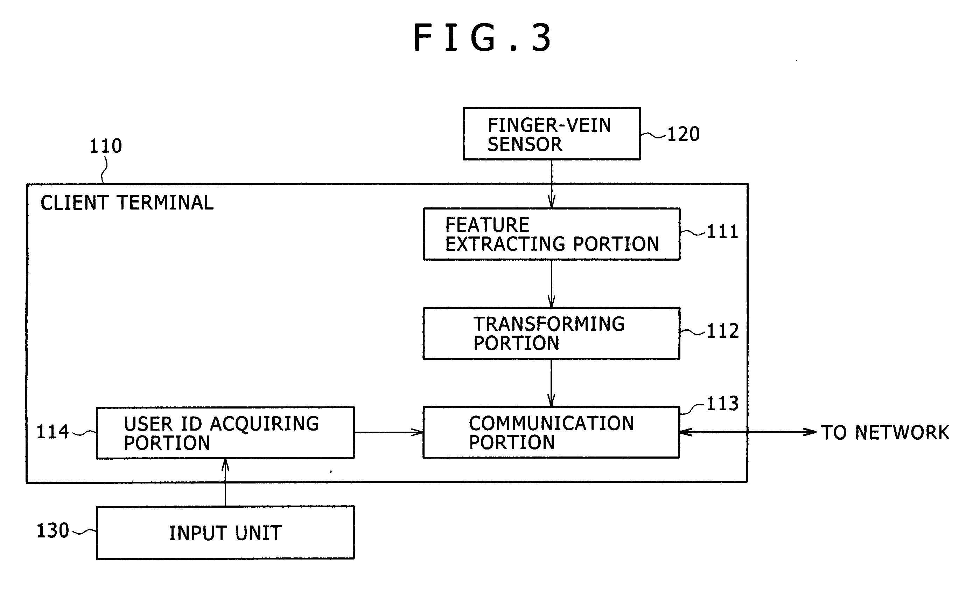

FIG. 3 is a schematic diagram illustrating the functional configuration of the client terminal 110.

The client terminal 110 includes feature extracting portion 111, a transforming portion 112, a communication portion 113 and a user ID acquiring portion 114. Although the configuration of hardware is not illustrated, the client terminal 110 includes a storage device, a CPU and a memory. Various functions of the above feature extracting portion 111 to the user ID acquiring portion 114 are realized by the CPU executing a predetermined application program.

At the time of registration and authentication, the client terminal 110 transmits the user ID (UID) input from the input unit 130 to the parameter manage server 140 and receives the user parameter K transmitted from the parameter manage server 140. The client terminal 110 acquires the finger-vein image of a user to extract the feature thereof and produces the transformation feature KF (or, K⁻¹G). The client terminal 110 transmits the transformation feature KF (or, K⁻¹G) to the authentication server 100 to cause it to perform registration or match.

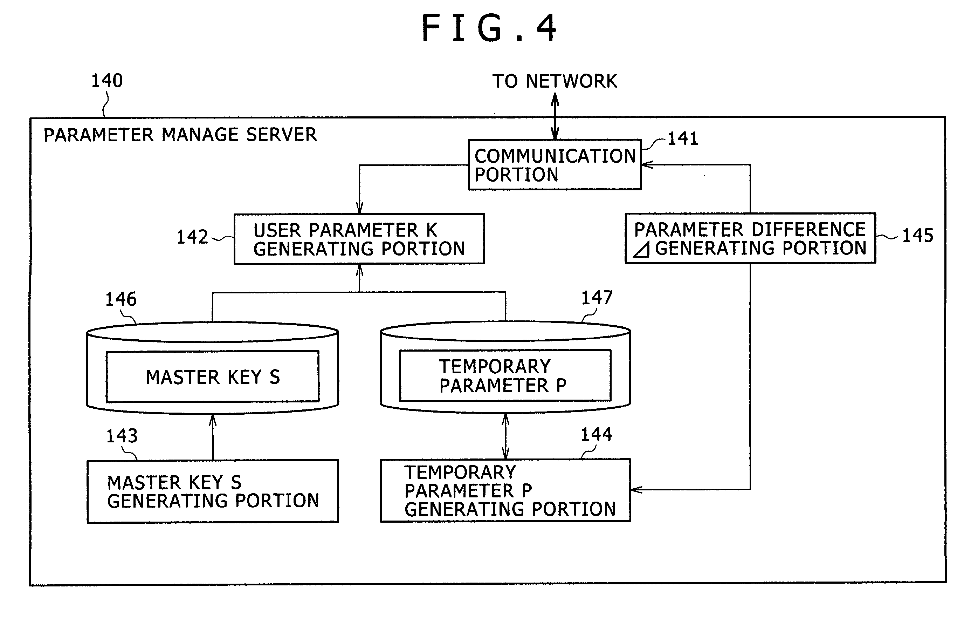

FIG. 4 is a schematic diagram illustrating the functional configuration of the parameter manage server 140.

The parameter manage server 140 includes a communication portion 141, a user parameter K generating portion 142, a master key S generating portion 143, a temporary parameter P generating portion 144, a parameter difference Δ generating portion 145, a master key DB 146 for storing the generated master key S and a temporary parameter key DB 147 for storing the generated temporary parameter key P. Although the configuration of hardware is not illustrated, the parameter manage server 140 includes a storage device, a CPU and a memory. Various functions of the above communication portion 141 to the generating portion 145 are realized by the CPU executing a predetermined application program.

At the time of system initialization, the master key S and the temporary parameter P are generated and stored in each DB.

At the time of registration and authentication, the parameter manage server 140 generates the user parameter K using the user ID (UID) received from the client terminal 110, the master key S and the temporary parameter P and transmits the generated user parameter K to the client terminal 110.

At the time of renewal of the temporary parameter, the parameter manage server 140 generates the parameter difference Δ to renew the temporary parameter P to P' = ΔP using the parameter difference Δ. The parameter manage server 140 transmits the parameter difference Δ to the authentication server 100.

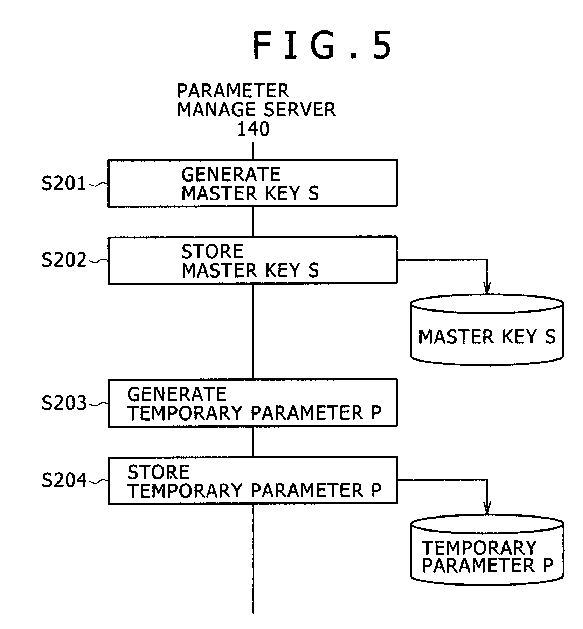

FIG. 5 is a flow chart of system initialization in a parameter manage server 140.

The master key S generating portion 143 in the parameter manage server 140 generates the master key S (S201). The master key S is generated using a random number generator, for example. The generated master key S is stored in the master key DB 146 (S202).

The temporary parameter P generating portion 144 generates the temporary parameter P using a random number generator, for example (S203). Since the temporary parameter P can be considered a two-dimensional image, hereinafter, it is referred to as P(x,y). The generated temporary parameter P is stored in the temporary parameter key PDB 147 (S204).

Incidentally, the executing order of S201 to 202 may be replaced with that of S203 to 204.

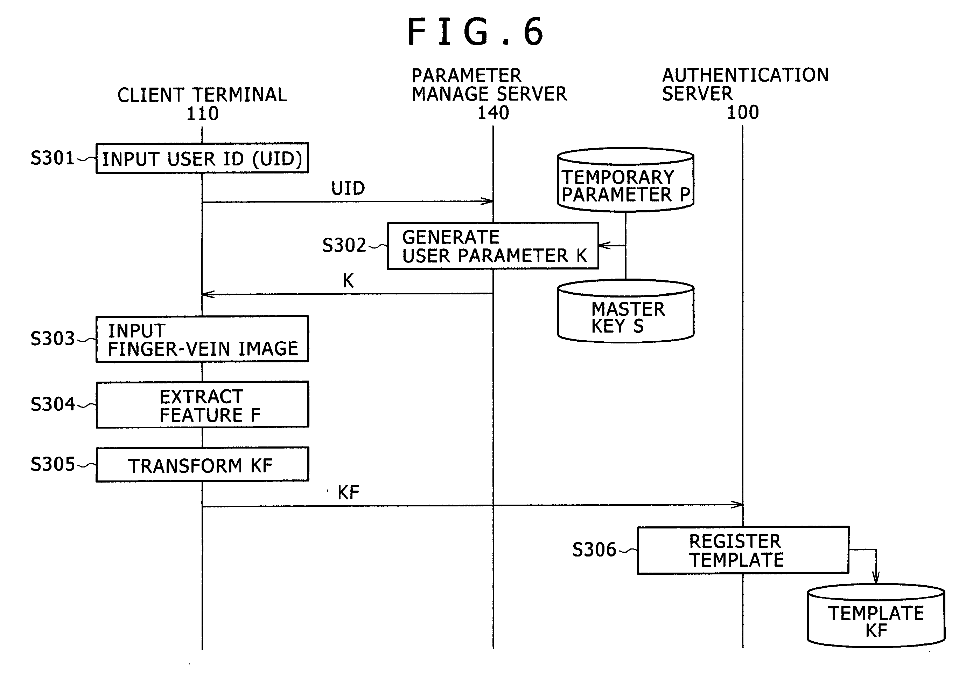

FIG. 6 illustrates a flow chart of registration process.

When a user inputs the user ID (UID) through the input unit 130 in the client terminal 110 (S301), the communication portion 113 transmits the UID to the parameter manage server 140.

The parameter manage server 140 generates the user parameter K using the received UID, the temporary parameter P(x,y) and the master key S (S302).

Several preferable examples of methods for generating the user parameter K are described below.

First, the UID is bit-concatenated to the master key S to generate a hash "h" of resultant data. Since the hash "h" can be considered a two-dimensional image, hereinafter, it is referred to as h(x,y). The values of each pixel to which h(x,y) and P(x,y) correspond are multiplied together. The result is taken as the user parameter K. Since the user parameter K can be considered a two-dimensional image, hereinafter, it is referred to as K(x,y). The parameter manage server 140 transmits the calculated K(x,y) to the client terminal 110.

Secondly, the UID is bit-concatenated to the master key S to generate a hash h(x,y) of resultant data. The hash h(x,y) is rendered equal in data size to P(x,y). The values of each pixel to which h(x,y) and P(x,y) correspond are added together. The result is taken as the user parameter K(x,y).

Thirdly, the UID is bit-concatenated to the master key S to generate a random number r(x,y) with the resultant data as a seed. The random number r(x,y) is rendered equal in data size to P(x,y). The values of each pixel to which r(x,y) and P(x,y) correspond are multiplied together. The result is taken as the user parameter K(x,y).

Fourth, the UID is bit-concatenated to the master key S to generate a random number r(x,y) with the resultant data as a seed. The values of each pixel to which r(x,y) and P(x,y) correspond are added together.
The result is taken as the user parameter K(x,y).

When the user places a finger on the finger-vein sensor 120 in the client terminal 110, a finger-vein image is acquired and input (S303). The feature extracting portion 111 extracts feature from the input finger-vein image to generate the feature F (S304). As a method of generating the feature F, there is available a method described in the following paper: Naoto Miura, Akio Nagasaka, and Takafumi Miyatake, "Feature extraction of finger-vein patterns based on repeated line tracking and it's application to personal identification", Machine Vision and Applications, Vo1.15, pp.194-203, 2004. Since the feature F can be considered a two-dimensional image, hereinafter, it is referred to as F(x,y).

The transforming portion 112 transforms the feature F using the user parameter K(x,y) to generate the transformation feature KF (S305). The transformation process multiplies together the values of each pixel to which F(x,y) and K(x,y) correspond. The result is taken as the transformation feature KF. Since the transformation feature KF can be considered a two-dimensional image, hereinafter, it is referred to as KF(x,y). After that, the client terminal 110 transmits KF(x,y) to the authentication server 100.

The authentication server 100 registers the received the transformation feature KF(x,y) as a template in the DB 104 (S306). Hereinafter, KF(x,y) is referred to as a template.

FIG. 4 illustrates an authentication process.

When the user inputs the user ID (UID) through the input unit 130 (S401) in the client terminal 110, the communication portion 113 transmits the input UID to the parameter manage server 140 (S402).

The parameter manage server 140 generates the user parameter K(x,y) using the received UID, the temporary parameter P(x,y) and the master key S (S402). As a method for generating the user parameter K(x,y), there is used the same method as the above in the flow of registration (S302).

The user's finger-vein image acquired by the finger-vein sensor 120 is input in the client terminal 110 (S403). The feature extracting portion 111 extracts feature from the input finger-vein image to generate the feature G (S404). As a method for generating the feature G, there is used the same method as that at the step S404 in the process for registration. Since the feature G can be considered a two-dimensional image, hereinafter, it is referred to as G(x,y).

The transforming portion 112 in the client terminal 110 transforms the feature G using the user parameter K(x,y) to generate the transformation feature K⁻¹G (S405).

The transformation process is performed as follows, for example. An inverse element related to multiplication of K(x,y) is generated and taken as K⁻¹(x,y). The values of each pixel to which G(x,y) and K⁻¹(x,y) correspond are multiplied together. The result is taken as the transformation feature K⁻¹G. Since the transformation feature K⁻¹G can be considered a two-dimensional image, hereinafter, it is referred to as K⁻¹G(x,y). After that, the client terminal 110 transmits the transformation feature K⁻¹G (x,y) to the authentication server 100.

The authentication server 100 matches the transformation feature K⁻¹G (x,y) against the template KF(x,y) (S406). The matching process is performed as follows, for example. The values of each pixel to which K⁻¹G (x,y) and KF(x,y) correspond are multiplied together. The result is taken as W(x,y). Inverse number theoretic transform is applied to W(x,y) to obtain a correlation function w(x,y). The maximum value of w(x,y) is taken as an evaluated value. If the evaluated value exceeds a threshold value, it is determined that the user is authenticated. If the evaluated value is not greater than the threshold value, it is determined that the user is not authenticated.

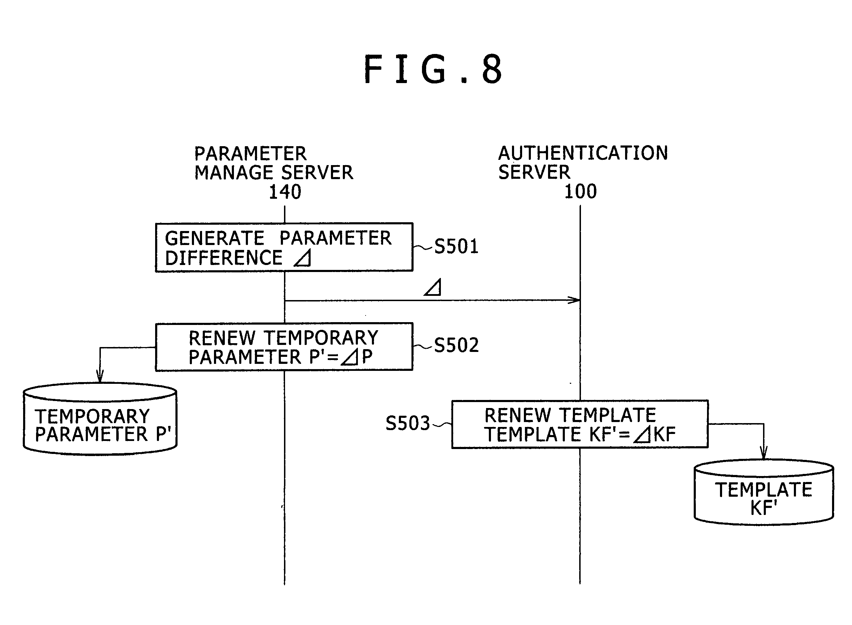

FIG. 8 is a flow chart of a renewal process for a temporary parameter.

The parameter manage server 140 generates the parameter difference Δ (S501). The parameter difference Δ is random number generated and rendered equal in data size to the temporary parameter P(x,y). Since the parameter difference Δ can be considered a two-dimensional image, hereinafter, it is referred to as Δ(x,y). The parameter manage server 140 transmits the generated parameter difference Δ(x,y) to the authentication server 100.

The parameter manage server 140 renews the temporary parameter P(x,y) (S502). In the renewal process, the values of each pixel to which P(x,y) and Δ(x,y) correspond are multiplied together. The result is taken as the renewed temporary parameter P'(x,y). After that, the parameter manage server 140 stores the renewed temporary parameter P'(x,y) in the temporary parameter key DB 147.

The authentication server 100 renews the template KF(x,y) (S503). In the renewal process, the values of each pixel to which the template KF(x,y) and the parameter difference Δ(x,y) correspond are multiplied together. The result is taken as KF'(x,y). KF'(x,y) is rendered a renewed template. After that, the authentication server 100 stores the renewed template KF'(x,y) in the template DB 104.

The above processes easily enable the renewal of the user parameter and the template without communication with the client terminal 110.

According to the present embodiment, the parameter manage server 140 is provided and the user ID and a finger-vein image are input to allow executing the cancelable finger-vein authentication system without using a Smart Card and a pass word. Furthermore, a user can execute a finger-vein authentication from any client terminal to realize the cancelable finger-vein authentication system which is more convenient than a conventional system.

The cancelable finger-vein authentication system according to the present invention is applicable to various biometric authentication systems in which biological information is registered in a server to perform authentication. This system is applicable, for example, to an information access control in an in-house network, a user authentication in internet banking or an automatic teller machine (ATM), login to web site for membership and personal authentication at the time of entry into a protection area.

## Claims

1. A biometric authentication system comprising:
a plurality of client terminals (110) which acquire the biological information of a user;
a first server (100) which authenticates the biological information acquired by the client terminal; and
a second server (140) which manages a parameter used at the time of biometric authentication, the client terminals and the first and the second server being connected together through a network (150);
wherein the client terminal includes an input unit (130) by which a user ID provided in advance for a user is input, a biological information sensor (120) which acquires the biological information of the user, feature extracting portion which extracts feature from the biological information acquired by the biological information sensor and a transforming portion which transforms the feature using the user parameter generated by the second server to generate transformation feature,
the first server includes a storing portion which stores a template of biological information of the user and a matching portion which matches the transformation feature transmitted from the client terminal against the template stored in the storing portion, and
the second server includes a user parameter generating portion which generates the user parameter using the user ID transmitted from the client terminal.

2. The biometric authentication system according to claim 1,
wherein the second server includes a master key generating portion which generates a master key and a temporary parameter generating portion which generates a temporary parameter, and
the user parameter generating portion generates the user parameter using the user ID, the master key generated by the master key generating portion and the temporary parameter generated by the temporary parameter generating portion.

3. The biometric authentication system according to claim 2,
wherein the second server further includes a parameter difference generating portion which generates a parameter difference using a random number and the temporary parameter generating portion which renews the temporary parameter using the parameter difference generated by the parameter difference generating portion.

4. The biometric authentication system according to claim 1,
wherein the first server stores in advance in the storing portion the transformation feature, as the template, which are transformed by the user parameter and generated in the client terminal.

5. The biometric authentication system according to claim 2,
wherein the first server includes a renewal process portion which renews the template stored in the storing portion using the parameter difference generated by the parameter difference generating portion of the second server and stores the renewed template in the storing portion.

6. A biometric authentication method for a biometric authentication system comprising:
a plurality of client terminals (110) which acquire the biological information of a user;
a first server (100) which authenticates the biological information acquired by the client terminal; and
a second server (140) which manages a parameter used at the time of biometric authentication, the client terminals and the first and the second server being connected together through a network (150); the biometric authentication method including the steps of:
inputting a user ID provided in advance for a user through an input unit (130), acquiring the biological information of the user using a biological information sensor (120), extracting feature from the biological information acquired by the biological information sensor, in the client terminal,
generating the user parameter using the user ID transmitted from the client terminal, in the second server,
transforming the feature using the user parameter received from the second server to generate transformation feature, in the client terminal, and
matching the transformation feature transmitted from the client terminal against the template of biological information of the user stored in advance in the storing portion, in the first server.

7. The biometric authentication method according to claim 6,
wherein at the time of registering the template, the client terminal transforms the feature using the user parameter obtained from the second server to generate transformation feature and transmits the transformation feature to the first server and the first server stores the received transformation feature in the storing portion as a template.

8. A parameter manage server (140) which is connected to a plurality of client terminals (110) acquiring biological information of a user and an authentication server (100) authenticating biological information through a network (150) and manages a parameter used at the time of biometric authentication, the parameter manage server comprising:
a receiving portion which receives a user ID transmitted from the client terminal;
a master key generating portion which generates a master key;
a temporary parameter generating portion which generates a temporary parameter;
a storing portion which stores the generated master key and temporary parameter;
a user parameter generating portion which generates the user parameter using the user ID received through the receiving portion, the master key generated by the master key generating portion and the temporary parameter generated by the temporary parameter generating portion; and
a transmitting portion which transmits the user parameter generated by the user parameter generating portion to the client terminal.

9. The parameter manage server according to claim 8 further comprising a parameter difference generating portion which generates a parameter difference using a random number, wherein the temporary parameter generating portion renews the temporary parameter using the parameter difference generated by the parameter difference generating portion.

10. The system of claim 2 or server of claim 8, wherein the user parameter generating portion generates the user parameter such that the user ID is bit-concatenated to the master key to generate a hash of the bit-concatenated data and each value of the hash is multiplied with or added to each value of the temporary parameter.

11. The system of claim 2 or server of claim 8, wherein the user parameter generating portion generates the user parameter such that the user ID is bit-concatenated to the master key to generate a random number with the bit-concatenated data as a seed and each value of the generated random number is multiplied with or added to each value of the temporary parameter.

12. An authentication managing method for a parameter manage server (140) which is connected to a plurality of client terminals (110) acquiring biological information of a user and an authentication server (100) authenticating biological information through a network (150) and manages a parameter used at the time of biometric authentication, the authentication managing method comprising the steps of:
receiving a user ID transmitted from the client terminal through a communication portion;
generating a master key;
generating a temporary parameter;
storing the generated master key and temporary parameter in a storing portion;
generating the user parameter using the user ID received through the communication portion, the master key and the temporary parameter; and
transmitting the generated user parameter to the client terminal through the communication portion.

13. A client terminal (110) used for authenticating biological information of a user and connected to a first server (100) which authenticates biological information of a user and a second server (140) which generates a parameter used for subjecting the biological information to a transformation process, through a network (150), the client terminal comprising:
an input unit (130) by which a user ID provided in advance for a user is input;
a transmitting portion which transmits the user ID input by the input unit to the second server;
a receiving portion which receives the parameter from the second server;
a biological information sensor (120) which acquires the biological information of the user;
a feature extracting portion which extracts feature from the biological information acquired by the biological information sensor;
a transforming portion which transforms the feature using the user parameter received from the receiving portion to generate transformation feature; and
a transmitting portion which transmits the transformation characteristic generated by the transforming portion to the first server.

14. A program used for biometric authentication executed by a client terminal (110), a first server (100) and a second server (140) in a biometric authentication system including the plurality of client terminals which acquire the biological information of a user, the first server which authenticates the biological information acquired by the client terminal and the second server which manages a parameter used at the time of biometric authentication, the client terminals and the first and the second server being connected together through a network (150), the program comprising the steps of:
inputting a user ID provided in advance for a user through an input unit (130), acquiring the biological information of the user using a biological information sensor (120), extracting feature from the biological information acquired by the biological information sensor, in the client terminal,
generating the user parameter using the user ID transmitted from the client terminal, in the second server,
transforming the feature using the user parameter received from the second server to generate transformation feature, in the client terminal, and
matching the transformation feature transmitted from the client terminal against a template of biological information of the user stored in advance in the storing portion, in the first server.

15. An authentication managing program executed by a parameter manage server (140) which is connected to a plurality of client terminals (110) acquiring biological information of a user and an authentication server (100) authenticating biological information through a network (150) and manages a parameter used at the time of biometric authentication, the program comprising the steps of:
receiving a user ID transmitted from the client terminal through a communication portion;
generating a master key;
generating a temporary parameter;
storing the generated master key and temporary parameter in a storing portion;
generating the user parameter using the user ID received through the communication portion, the master key and the temporary parameter; and
transmitting the generated user parameter to the client terminal through the communication portion.
